# EUROPEAN PATENT SPECIFICATION

(11) **EP 2 688 229 B1**
(45) Date of publication and mention of the grant of the patent: **30.08.2017**
(21) Application number: 12290245.5
(22) Date of filing: 17.07.2012
(51) Int. Cl.: H04B 10/114

(54) **Method for detecting interactive devices and associated equipments**
Verfahren zur Detektion interaktiver Vorrichtungen und zugehörige Einrichtungen
Procédé de détection de dispositifs intéractifs et équipements associés

(43) Date of publication of application: 22.01.2014
(73) Proprietor: ALCATEL LUCENT, 92100 Boulogne-Billancourt (FR)
(72) Inventor: Boussard, Mathieu, 91620 Nozay (FR); Toubiana, Vincent, 91620 Nozay (FR)

(56) References cited:
- WO-A1-2011/133590
- US-B1- 8 190 095

## Description

### BACKGROUND OF THE INVENTION

The present invention relates to the field of pervasive computing and smart spaces and more particularly to the detection of interactive devices based on near-field communication.

Indeed pervasive computing, that is to say the establishment of an electronic network comprising everyday objects is more and more present in our environment so that many objects of our environment may be remotely controlled using an electronic device connected to these objects through a wireless network. However, it is not always easy to detect which of the surrounding objects are interactive objects that can be controlled through interaction with a user equipment handled by a user such as a smartphone, a personal digital assistant (PDA), a notebook or a tablet when entering a smart environment such as a room or an office. Furthermore, the solutions of the state of the art for the detection by a user of interactive devices such as Bluetooth, Radio-Frequency IDentification (RFID) or local area network (LAN) technologies lack of range awareness as any objects located within a given distance or connected to a given network are detected without distinguishing if they are located in the same room as the user or in another room and the user has no mean to determine directly which objects are interactive devices when the user enters a room. Document US 8,190,095 discloses a radio frequency distribution system including infrared presence detection and document WO 2011/133590 discloses a user equipment using image capture technology for detecting the presence and relative location of various computing devices of the environment.

### SUMMARY OF THE INVENTION

It is therefore an object of the present invention to overcome the above mentioned drawbacks of the state of the art and to provide a solution for detecting devices of a smart space defined by a room.

Thus, the embodiments of the present invention refer to a method for detecting, from a user equipment comprising optical detection means, an interactive device in a near-field environment of a central station, the said method comprising the following steps:
- positioning an electronic beacon on the interactive device, the said electronic beacon comprising optical means capable of emitting an optical signal and radio-frequency communication means configured for communicating with the central station,
- configuring the central station with functions of the interactive device associated with the electronic beacon,
   when the user equipment enters a near-field environment of the central station,
- establishing a radio-frequency communication between the user equipment and the central station,
- transmitting from the central station to the user equipment, the functions of the interactive device associated with the electronic beacon and an identification of the electronic beacon,
- upon request from the user equipment to the central station to detect the interactive device, sending a command from the central station to the electronic beacon for emitting an optical signal corresponding to the identification of the interactive device,
- detecting, by the optical detection means of the user equipment, an optical signal emitted by the electronic beacon and corresponding to the identification of the interactive device,
- attributing the functions transmitted by the central station and associated with the identified electronic beacon to the interactive device associated with the detected electronic beacon.

According to another embodiment of the present invention, a plurality of interactive devices is located within the near-field environment of the central station, the said interactive devices being associated respectively with electronic beacons having identifications different from each others.

According to a further embodiment of the present invention, the optical detection means refer to a camera and the method comprises additional steps of
- taking a picture or a video by the camera of the user equipment of the near-field environment of the central station and,
- displaying the functions of the at least one interactive device associated with the detected electronic beacon on the picture or video of the near-field environment of the central station.

According to an additional embodiment of the present invention, the optical signal is a signal emitted in the visible spectrum.

According to another embodiment of the present invention, the optical signal is a signal emitted in the infrared spectrum.

According to a further embodiment of the present invention, the radio-frequency communication between the central station and the electronic beacons is performed based on one of the following protocols:
- a Zigbee protocol,
- a Wireless fidelity (WIFI) protocol,
- a Bluetooth protocol.

According to an additional embodiment of the present invention, the radio-frequency communication between the central station and the user equipment is performed based on one of the following protocols:
- a Zigbee protocol,
- a Wireless fidelity (WIFI) protocol,
- a Bluetooth protocol,
- a third generation (3G) protocol.

According to another embodiment, the request from the user equipment to the central station to detect the interactive device comprises at least one technical feature associated with the optical detection means of the user equipment which is used to configure the electronic beacon for emitting an optical signal.

The embodiments of the present invention also refer to a central station comprising:
- near field communication means to communicate on one side with a user equipment and on the other side with at least one electronic beacon associated with an interactive device,
- a data repository to store the functions of the at least one interactive device and an identification of the associated electronic beacon,
wherein the central station is configured to transmit a list of the interactive devices, their functions and the identification of the associated electronic beacons of the near-field environment of the central station to a user equipment when a communication is established with a user equipment and for transmitting a request for emitting an optical signal to an electronic beacon upon reception of a request from a user equipment to detect an interactive device associated with the electronic beacon.

The embodiments of the present invention also refer to an electronic beacon comprising optical means configured for emitting an optical signal representative of an identification upon reception of a request from a central station.

According to another embodiment of the present invention, the said electronic beacon is a dongle plugged into an associated interactive device.

According to a further embodiment of the present invention, the optical signal representative of an identification is obtained by modulating the optical signal according to a predetermined modulation.

According to an additional embodiment of the present invention, the optical signal is an infrared signal.

The embodiments of the present invention also refer to a user equipment comprising a camera and an infrared-ray sensor configured for detecting an infrared signal emitted by an electronic beacon located within the range of the camera and for locating on a picture taken by the camera the position of the electronic beacon having emitted the infrared signal.

### BRIEF DESCRIPTION OF THE DRAWINGS

FIG.**1** is a diagram of the different steps of the method occurring between a user equipment, a central station and electronic beacons according to an embodiment of the present invention;
FIG.**2** is a diagram of a room corresponding to a smart space comprising a plurality of interactive devices;
FIG.**3** is a diagram of the transfer of data concerning the interactive devices of the smart space from the central station to the user equipment;
FIG.**4** is a diagram of the sending of a request from the central station to the electronic beacons and the emission of an optical signal by the said electronic beacons;
Fig.**5** is a diagram of an augmented reality view obtained by the method according to an embodiment of the present invention;

In these drawings, the elements having the same reference correspond to elements having a similar function.

### DETAILED DESCRIPTION OF THE INVENTION

As used herein, the term "dongle" refers to a small piece of hardware comprising a software and destined to be plugged into an electronic device. The software runs only when the dongle is plugged.

As used herein, the term "set-top box" refers to an electronic equipment enabling to receive and decode digital television and/or to provide Internet connection.

As used herein, the term "Zigbee", "WIFI", and "Bluetooth" refers to protected trademarks of radio-frequency protocols and 3G refers to a standard for wireless connection.

The embodiments of the present invention refer to the use of active electronic beacons associated with interactive devices in a room, the said electronic beacons being capable of emitting an optical signal corresponding to an identification of the associated interactive device in order for a user equipment located in the room to detect the interactive devices using optical detection means such as a camera, a video recorder or an infrared-ray sensor. The electronic beacons are driven by a central station providing a near-field connection to the user equipment located within the room. The user equipment gets connected to the central station when entering the room.

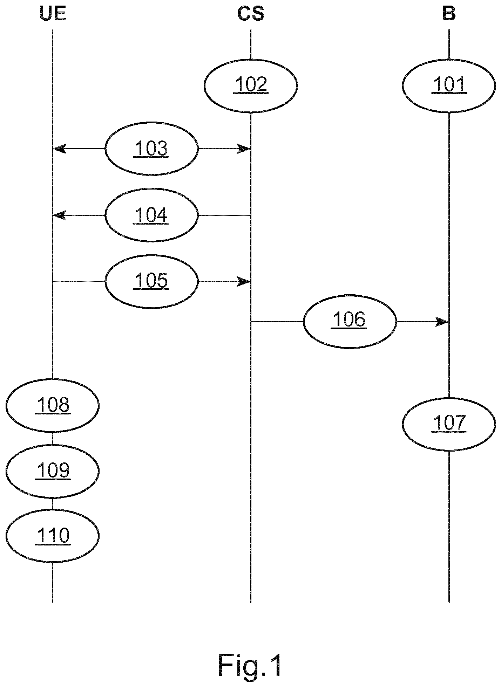

Fig.1 is a diagram representing the different steps of the method occurring between the user equipment UE, the central station CS and the electronic beacons B and enabling the detection of the interactive devices.

The first step 101 corresponds to the positioning of the electronic beacons B on the interactive devices in a room. The electronic beacons B comprise optical means capable of emitting light in the infrared and/or the visible domain. Different types of electronic beacons are considered. According to a first embodiment, the electronic beacons B are autonomous and work independently of the interactive devices. In this case, the electronic beacons B are placed on or next to their associated interactive device. They may also be set or glued to the interactive devices in order to ensure that the optical signal is emitted in the right direction, for example toward the center of the room or toward the door of the room. According to another embodiment, the electronic beacons may be plugged into the interactive devices, for example in the form of a dongle, so that they are supplied and interact directly with the interactive devices they are plugged in.

The second step 102 refers to the configuration of the central station CS. In this configuration, the functions of the interactive devices in the room and the identification of the electronic beacons B associated with each interactive device have to be stored in a data repository of the central station CS. Indeed, the central station CS can communicate with the electronic beacons to request them to emit an optical signal but the central station CS needs to know which electronic beacon is positioned on which interactive device as the correspondence between the electronic beacons and the interactive devices has to be transmitted to a user equipment entering the room. The central station CS may be implemented as a set-top box comprising radio frequency communication means for communicating with the electronic beacons B. These radio frequency communication means may be implemented in the set-top box or in a dongle plugged in the set-top box. This radio frequency communication is performed using for example a Zigbee protocol, a Bluetooth protocol or a WIFI protocol. Thus, the central station CS provides a wireless connection within a near-field environment corresponding to the room.
Besides, the electronic beacons B may be displaced on a different interactive device, for example in case of change of an interactive device. In this case, the central station has to be reconfigured with the functions of the new interactive device on which the electronic beacon is placed.

The steps 101 and 102 are preliminary steps or configuration steps required to set up the smart space corresponding to the room.

The third step 103 refers to the establishment of a communication between the central station CS and the user equipment UE. This step occurs when the user equipment UE enters the near-field environment of the central station CS, i.e. the room where the central station CS and the interactive devices are located. The user equipment UE is for example a smartphone, a PDA, a notebook or a tablet which comprises communication means to communicate with the interactive devices and with the central station CS. Different protocols may be used for the communication between the central station CS and the user equipment UE. The central station CS may comprise a server and may provide a WIFI or a 3G connection to the user equipment UE through the use of a dedicated server software such as a home sensor gateway software type. The WIFI connection may be provided through a wireless LAN 802.11 protocol. Alternatively, the central station CS may communicate with the user equipment UE by a Zigbee or a Bluetooth protocol such as an IEEE 802.15 protocol. Thus, when a user enters the room with its user equipment UE, the user equipment UE detects the connection provided by the central station CS and a radio-frequency communication is established between the central station CS and the user equipment UE. Besides, the protocol used between the central station CS and the user equipment UE may be the same as the protocol used between the central station CS and the electronic beacons B or may be a different one.

The fourth step 104 refers to the transmission, from the central station CS to the user equipment UE, of the functions of the interactive devices located in the room and the identification of the electronic beacons B associated with these interactive devices. The functions may refer only to the denomination of the device and may also comprise additional details as specific features provided by the interactive device. Thus, the user equipment UE receives a list of the interactive devices located in the room and their functions, for example a TV, an electric curtain, a light, a music player, an air conditioning system, a fridge, an oven etc...

The fifth step 105 refers to the sending of a command from the user equipment UE to the central station CS for triggering the emission of an optical signal by the electronic beacons B corresponding to selected interactive equipments. Indeed, based on the list received from the central station CS in step 104, the user selects one, several or all of the interactive devices of the list he wants to locate. A request comprising the identification of the electronic beacons associated with the selected interactive devices is then sent to the central station CS. Furthermore, according to an embodiment, the request comprises also at least one technical feature associated with the optical detection means such as the number of images per second taken by the camera, the video recorder or the infrared-ray sensor of the user equipment.

The sixth step 106 refers to the sending of a command, from the central station CS to the electronic beacons B associated with the selected interactive equipments, for emitting an optical signal. The command signals are sent successively after a predetermined amount of time to the different selected interactive devices so that the electronic beacons B emit their signal one after the other. The time interval between the sending of two commands is determined according to the time necessary for an electronic beacon to emit its signal. Furthermore, the command signal may comprise a technical feature associated with the user equipment in order for the beacon to adapt its emitted optical signal to this feature. The identification of the beacons is then optimized according to the capacities of the optical detection means of the user equipment. The communication between the central station CS and the electronic beacons B is a radio-frequency communication which can be based on a Zigbee, a Bluetooth or a WIFI protocol.

The seventh step 107 refers to the emission by the electronic beacons B of an optical signal corresponding to an identification of the associated interactive device on which the electronic beacon is positioned. This optical signal may be in the visible spectrum, in the infrared spectrum or a combination of visible and infrared light. The optical signal is coded, for example by using several lights such a light-emitted diodes (LEDs) the switched off lights corresponding to a 0 value an the switched on light corresponding to a 1 value. Alternatively, instead of a signal by a plurality of lights, predetermined shapes of light may be used to distinguish the different beacons. The shape being made by a mask having a particular shape which is lighted by an infrared or a visible light. For example different shapes corresponding to different letters may be used to distinguished the different electronic beacons. According to a further embodiment, the optical signal may also be coded using a modulation scheme with a single light which codes a signal along with time, such as a binary coded signal or a Morse coded signal. In this case, the frequency of emission of the signals can be configured according to the capacity of the optical detection means of the user equipment. The central station sends an emission request successively to all the electronic beacons associated with selected interactive devices so that the electronic beacon emit one after the other. Furthermore, in order to determine if several interactive devices are linked with each other, a command may be sent to the linked interactive devices to emit simultaneously. However, the information concerning links between interactive devices, for example a screen linked to a camera, may also be sent with the functions of the interactive devices at step 104.

The eighth step 108 refers to the detection by the user equipment UE of the optical signals emitted by the emitting electronic beacons B located in the room and the identification of the interactive devices associated with the electronic beacons. In a preferred embodiment, the user equipment is equipped with both a visible-ray camera and an infrared-ray sensor configured to have the same range as the camera so that the data provided by the camera and the data provided by the infrared-ray sensor can be superimposed to achieve an augmented reality view. Alternatively, the user equipment comprises only visible-ray camera (in this case, the electronic beacons emit only in the visible domain). The detection may be performed using an image analysis software based on both the visible-ray camera and the infrared ray sensor and which is configured to decode the optical signals emitted by the electronic beacons. Alternatively, a single camera capable of detecting visible and infrared light may be used. Thus, the user holds his/her user equipment so that the visual field of the infrared and/or visible sensor comprises the different objects of the room until the detection is completed, i.e. until all the selected interactive devices are detected.

The ninth step 109 refers to the attribution, by the user equipment UE, of the functions transmitted in step 104 by the central station CS to the interactive devices identified in step 108. Indeed, the user equipment UE is configured for locating an electronic beacon emitting a visible or an infrared signal and for determining the position of the said electronic beacon on a picture taken by the camera of the user equipment. Thus, the user equipment UE can associate the name and the functions of an interactive device located in the range of camera of the user equipment UE based on the determined location of an electronic beacon emitting an infrared signal within the range of the camera.

The tenth step 110 refers to the representation of the room which is the smart space on the screen of the user equipment UE with information about the functions of the identified interactive devices to provide an augmented reality view of the room and to inform the user of the user equipment UE of the interactive devices with which he can interact with its user equipment UE. The augmented reality view may be a picture of the room with labels located next to the detected interactive devices and comprising the function of the interactive devices or can be a view displayed on the screen of the user equipment UE and corresponding to the view taken in live by the user equipment. The labels are then added directly on the video taken and displayed by the camera of the user equipment UE.

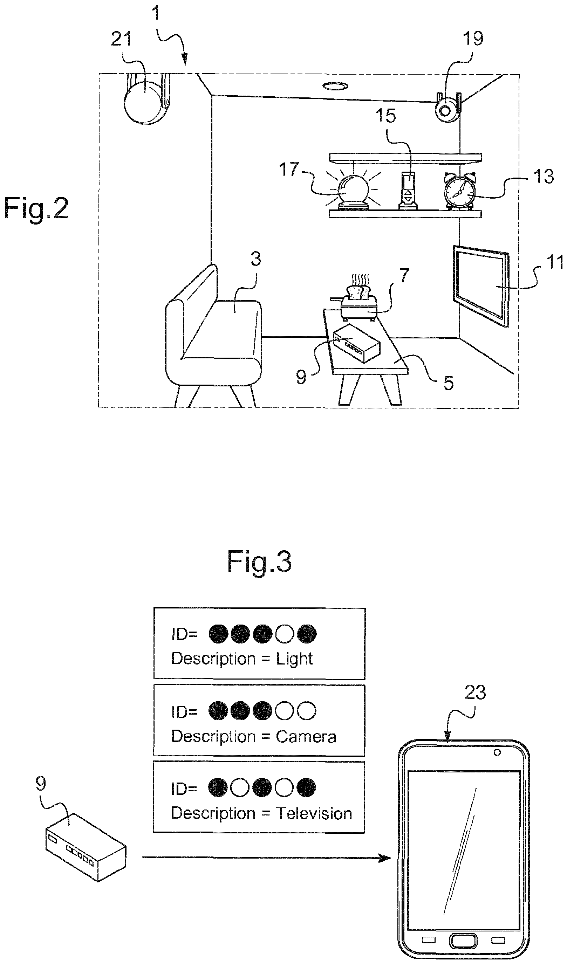

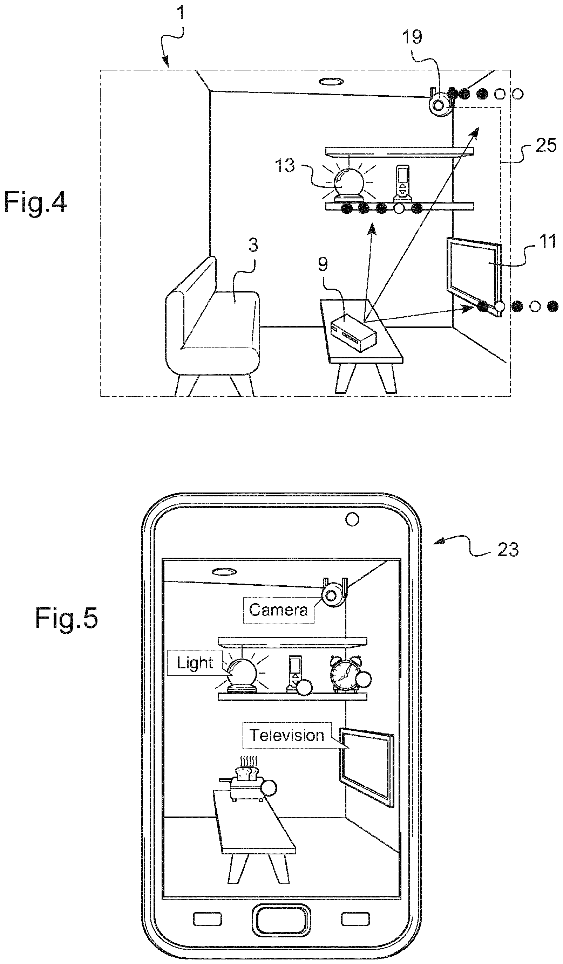

In order to better understand the present invention, an exemplary embodiment will now be described in details based on fig.2 which represents a room 1 corresponding to a smart space comprising a plurality of interactive devices. The room 1 comprises a plurality of objects: a sofa 3, a table 5, a toaster 7, a set-top box 9, a TV 11, an alarm clock 13, a phone 15, a lamp/light 17, a first webcam 19 and a second webcam 21. The TV 11, the light 17 and the first webcam 19 are interactive devices on which electronic beacons have been positioned. The set-top box 9 comprises a Zigbee dongle to communicate with the electronic beacons and has been configured with the correspondence between the functions of the interactive devices (the TV 11, the light 17 and the first webcam 19) and the identification of their associated electronic beacons, for example in a data repository of the set-top box. When a user equipped with a user equipment, for example a smartphone 23 (non represented in fig.2) enters the room the smartphone detects that a wireless connection is provided through a set-top box using a Zigbee protocol and a message is displayed by the smartphone 23 to inform the user of the available connection and requests his/her agreement to establish the near-filed connection with the set-top box 9. Upon agreement of the user, the smartphone 23 gets connected to the set-top box 9 through the Zigbee connection. When the connection is established, the set-top box 9 sends to the smartphone 23 the list of interactive devices located in the room, i.e. the TV 11, the light 17 and the first webcam 19 and their identification code which is a 5-bit binary code in the present case (10101 for the TV 11, 11101 for the light 17 and 11100 for the first webcam 19) as represented in fig.3. Furthermore, the list of interactive devices indicates that the first webcam 19 and the TV 11 are linked to each other. A message is then displayed to the user to inform him/her of the presence of interactive devices within the room 1. The user may then request to detect which and where are these interactive devices. The user may request the detection of all the interactive devices or only the interactive devices having a particular function such as a display screen or a waking up function, etc... In the present case, the user wants to know the location and functions of all the interactive devices of the room 1. A request is then sent from the smartphone 23 to the set-top box 9 to activate the electronic beacons corresponding to all the interactive devices, the infrared sensor of the smartphone 23 is activated and a message is displayed to the user to hold his/her smartphone 23 so that the infrared sensor is directed toward the objects of the room 1. Furthermore, the request comprises the capacity of the video recorder of the smartphone, for example 30 frames per second. The image of the room 1 is also recorded by the camera of the smartphone 23 and displayed on the screen of the smartphone 23. The set-top box 9 sends a request to the electronic beacon associated with the TV 11 through the Zigbee connection to emit the infrared signal corresponding to its identification, i.e. 11101 with 1 corresponding to an emission of a signal and 0 corresponding to a non-emission, the duration of a bit and an inter-bit being predetermined or calculated according to the number of frames per second of the camera of the smartphone 23, for example 0.1 second, the first bit being a starting bit which is always set to 1. After a predetermined time (longer than the duration for the electronic beacon associated with the TV 11 to emit its signal), for example 1 second, a request for emitting is sent from the set-top box 9 to the electronic beacon associated with the light and one second later, a request for emitting is sent to the electronic beacon associated with the first webcam. The different identification codes are emitted successively by blinking an infrared light as represented schematically in fig.4. The infrared signals are detected by an infrared sensor of the smartphone. The electronic beacons may also emit visible light in order for the user to detect directly the location of the interactive devices of interest. The smartphone detects first the signal 10101 and attribute this signal to the TV 11 thanks to the correspondence sends previously by the set-top box 9. A label with the indication "television" is then added on the screen of the smartphone 23 is then added next to the interactive device associated with the electronic beacon having sent the code 10101. In the same way, labels with the indications "light" and "webcam" are added next to the corresponding interactive devices as represented in fig.5 leading thus to an augmented reality view of the room 1. The user is then aware that he can interacts with a TV, a light and a camera through his/her smartphone. Furthermore, the interactive devices that are linked to each other, in the present case, the TV 11 is linked to the first webcam 19, a virtual wire 25 may be drawn between the TV 11 and the first webcam 19 on the augmented reality view of the room 1. The user may then use its smartphone to control the interactive devices of the room, for example for switching on or off the light or for switching the channels of the TV.

Thus, the embodiments of the present invention provide a way for a user to detect and locate, through its user equipment, the interactive devices of a smart space corresponding to a near-field environment by a simple detection procedure wherein its user equipment launches and detects the emission of optical signals by electronic beacons positioned on the different interactive devices. The optical signal providing the desired range awareness and range discrimination. Furthermore, such procedure may be transparent for the user with the use of infrared signals.

## Claims

1. Method for detecting, from a user equipment (UE, 23) comprising optical detection means, an interactive device in a near-field environment of a central station (CS,9) said method comprising the following steps:
- positioning an electronic beacon (B) on the interactive device, the said electronic beacon (B) comprising optical means capable of emitting an optical signal and radio-frequency communication means configured for communicating with the central station (CS, 9),
- configuring the central station (CS, 9) with functions of the interactive device associated with the electronic beacon (B),
when the user equipment (UE, 23) enters a near-field environment of the central station (CS, 9),
- establishing a radio-frequency communication between the user equipment (UE, 23) and the central station (CS, 9),
- transmitting from the central station (CS, 9) to the user equipment (UE, 23), the functions of the interactive device associated with the electronic beacon (B) and an identification of the electronic beacon (B),
- upon request from the user equipment (UE, 23) to the central station (CS, 9) to detect the interactive device, sending a command from the central station (CS, 9) to the electronic beacon (B) for emitting an optical signal corresponding to the identification of the interactive device,
- detecting, by the optical detection means of the user equipment (UE, 23), an optical signal emitted by the electronic beacon (B) and corresponding to the identification of the interactive device,
- attributing the functions transmitted by the central station and associated with the identified electronic beacon (B) to the interactive device associated with the detected electronic beacon (B).

2. Method in accordance with claim 1 wherein a plurality of interactive devices is located within the near-field environment of the central station (CS, 9), the said interactive devices being associated respectively with electronic beacons (B) having identifications different from each others.

3. Method in accordance with claim 1 or 2 wherein the optical detection means refer to a camera and wherein it comprises additional steps of
- taking a picture or a video by the camera of the user equipment (UE, 23) of the near-field environment of the central station (CS, 9) and,
- displaying the functions of the at least one interactive device associated with the detected electronic beacon (B) on the picture or video of the near-field environment of the central station (CS, 9).

4. Method in accordance with one of the previous claims wherein the optical signal is a signal emitted in the visible spectrum.

5. Method in accordance with one of the previous claims wherein the optical signal is a signal emitted in the infrared spectrum.

6. Method in accordance with one of the previous claims wherein the radio-frequency communication between the central station (CS, 9) and the electronic beacons (B) is performed based on one of the following protocols:
- a Zigbee protocol,
- a Wireless fidelity (WIFI) protocol,
- a Bluetooth protocol.

7. Method in accordance with one of the previous claims wherein the radio-frequency communication between the central station (CS, 9) and the user equipment (UE, 23) is performed based on one of the following protocols:
- a Zigbee protocol,
- a Wireless fidelity (WIFI) protocol,
- a Bluetooth protocol,
- a third generation (3G) protocol.

8. Method in accordance with one of the previous claims wherein the request from the user equipment (UE, 23) to the central station (CS, 9) to detect the interactive device comprises at least one technical feature associated with the optical detection means of the user equipment (UE, 23) which is used to configure the electronic beacon (B) for emitting an optical signal.

9. Central station (CS, 9) comprising:
- near field communication means to communicate on one side with a user equipment (UE, 23) and on the other side with at least one electronic beacon (B) associated with an interactive device,
- a data repository to store the functions of the at least one interactive device and an identification of the associated electronic beacon (B),
wherein the central station (CS, 9) is configured to transmit a list of the interactive devices, their functions and the identification of the associated electronic beacons (B) of the near-field environment of the central station (CS, 9) to a user equipment (UE, 23) when a communication is established with a user equipment (UE, 23) and for transmitting a request for emitting an optical signal to an electronic beacon (B) upon reception of a request from a user equipment (UE, 23) to detect an interactive device associated with the electronic beacon (B).

10. Set comprising a central station in accordance with claim 9 and at least one electronic beacon (B) wherein the said electronic beacon comprises optical means configured for emitting an optical signal representative of an identification upon reception of a request from the central station (CS, 9).

11. Set in accordance with claim 10 wherein the said electronic beacon (B) is a dongle plugged into an associated interactive device.

12. Set in accordance with claim 10 or 11 wherein the optical signal representative of an identification is obtained by modulating the optical signal according to a predetermined modulation.

13. Set in accordance with one of the claims from 10 to 12 wherein the optical signal is an infrared signal.

14. User equipment (UE, 23) comprising a camera and an infrared-ray sensor wherein said user equipment is configured for sending a command to a central station for triggering an emission of an optical signal by an electronic beacon, for detecting an infrared signal emitted by an electronic beacon (B) located within the range of the camera following the transmission of said command and for locating on a picture taken by the camera the position of the electronic beacon (B) having emitted the infrared signal.

## Patentansprüche

1. Verfahren zum Erkennen, von einem Teilnehmergerät (UE, 23), umfassend ein optisches Erkennungsmittel, eine interaktive Vorrichtung in einer Nahfeldumgebung einer Zentralstation (CS, 9), wobei besagtes Verfahren die folgenden Schritte umfasst:
- Positionieren einer elektronischen Bake (B) an der interaktiven Vorrichtung, wobei besagte elektronische Bake (B) ein optisches Mittel umfasst, das fähig ist zum Emittieren eines optischen Signals, und ein Funkfrequenz-Kommunikationsmittel, das konfiguriert ist zum Kommunizieren mit der Zentralstation (CS, 9),
- Konfigurieren der Zentralstation (CS, 9) mit Funktionen der interaktiven Vorrichtung, die mit der elektronischen Bake (B) verbunden ist,
wenn das Teilnehmergerät (UE, 23) eine Nahfeldumgebung der Zentralstation (CS, 9) erreicht,
- Aufbau einer Funkfrequenzkommunikation zwischen dem Teilnehmergerät (UE, 23) und der Zentralstation (CS, 9),
- Übertragen von der Zentralstation (CS, 9) auf das Teilnehmergerät (UE, 23) der Funktionen der interaktiven Vorrichtung, die mit der elektronischen Bake (B) verbunden ist, und Identifizieren der elektronischen Bake (B),
- auf Anforderung vom Teilnehmergerät (UE, 23) an die Zentralstation (CS, 9) zum Erkennen der interaktiven Vorrichtung, Senden eines Befehls von der Zentralstation (CS, 9) zur elektronischen Bake (B) zum Emittieren eines optischen Signals, das mit der Identifizierung der interaktiven Vorrichtung verbunden ist,
- Erkennen durch das optische Erkennungsmittel des Teilnehmergeräts (UE, 23) eines optischen Signals, das von der elektronischen Bake (B) emittiert wird und der Identifizierung der interaktiven Vorrichtung entspricht,
- Zuordnen der Funktionen, die von der Zentralstation übertragen worden sind und mit der identifizierten elektronischen Bake (B) verbunden sind, an die interaktive Vorrichtung, die mit der erkannten elektronischen Bake (B) verbunden ist.

2. Verfahren nach Anspruch 1, wobei eine Vielzahl von interaktiven Vorrichtungen innerhalb einer Nahfeldumgebung der Zentralstation (CS, 9) lokalisiert ist, wobei besagte interaktive Vorrichtung entsprechend mit elektronischen Baken (B) verbunden ist, die voneinander unterschiedliche Identifizierungen aufweisen.

3. Verfahren nach Anspruch 1 oder 2, wobei das optische Erkennungsmittel sich auf eine Kamera bezieht und wobei es zusätzliche Schritte umfasst
- Aufnahme eines Bildes oder eines Videos durch die Kamera des Teilnehmergeräts (UE, 23) der Nahfeldumgebung der Zentralstation (CS, 9) und
- Anzeigen der Funktionen der mindestens einen interaktiven Vorrichtung, die mit der erkannten elektronischen Bake (B) verbunden ist auf einem Bild oder Video der Nahfeldumgebung der Zentralstation (CS, 9).

4. Verfahren nach einem der vorhergehenden Ansprüche, wobei das optische Signal ein Signal ist, das im sichtbaren Spektrum emittiert wird.

5. Verfahren nach einem der vorhergehenden Ansprüche, wobei das optische Signal ein Signal ist, das im Infrarotspektrum emittiert wird.

6. Verfahren nach einem der vorhergehenden Ansprüche, wobei die Funkfrectuenzkommunikation zwischen der Zentralstation (CS, 9) und der elektronischen Bake (B) durchgeführt wird auf Grundlage eines der folgenden Protokolle:
- eines Zigbee-Protokolls,
- eines Wireless-Fidelity-Protokolls (WIFI),
- eines Bluetooth-Protokolls.

7. Verfahren nach einem der vorhergehenden Ansprüche, wobei die Funkfrequenzkommunikation zwischen der Zentralstation (CS, 9) und dem Teilnehmergerät (UE, 23) durchgeführt wird auf Grundlage eines der folgenden Protokolle:
- eines Zigbee-Protokolls,
- eines Wireless-Fidelity-Protokolls (WIFI),
- eines Bluetooth-Protokolls,
- eines 3G-Protokolls (third generation).

8. Verfahren nach einem der vorhergehenden Ansprüche, wobei die Anforderung vom Teilnehmergerät (UE, 23) an die Zentralstation (CS, 9) zum Erkennen der interaktiven Vorrichtung mindestens ein technisches Merkmal umfasst, das mit dem optischen Erkennungsmittel des Teilnehmergeräts (UE, 23) verbunden ist, das verwendet wird zum Konfigurieren der elektronischen Bake (B) zum Emittieren eines optischen Signals.

9. Zentralstation (CS, 9), umfassend:
- ein Nahfeld-Kommunikationsmittel, um auf einer Seite mit einem Teilnehmergerät (UE, 23) zu kommunizieren, und auf der anderen Seite mit mindestens einer elektronischen Bake (B), die mit einer interaktiven Vorrichtung verbunden ist,
- ein Datenarchiv zum Speichern der Funktionen der mindestens einen interaktiven Vorrichtung und einer Identifizierung der verbundenen elektronischen Bake (B),
wobei die Zentralstation (CS, 9) konfiguriert ist zum Übertragen einer Liste der interaktiven Vorrichtungen, ihrer Funktionen und der Identifizierung der verbundenen elektronischen Baken (B) der Nahfeldumgebung der Zentralstation (CS, 9) auf ein Teilnehmergerät (UE, 23), wenn eine Kommunikation aufgebaut wird mit einem Teilnehmergerät (UE, 23), und zum Übertragen eines optischen Signals auf eine elektronische Bake (B) nach Erhalten einer Anforderung von einem Teilnehmergerät (UE, 23) zum Erkennen einer interaktiven Vorrichtung, die mit der elektronischen Bake (B) verbunden ist.

10. Satz, umfassend eine Zentralstation nach Anspruch 9 und mindestens eine elektronische Bake (B), wobei besagte elektronische Bake ein optisches Mittel umfasst, das konfiguriert ist zum Emittieren eines optischen Signals, das repräsentativ ist für eine Identifizierung nach Erhalten einer Anforderung von der Zentralstation (CS, 9).

11. Satz nach Anspruch 10, wobei besagte elektronische Bake (B) ein Dongle ist, der in eine verbundene interaktive Vorrichtung eingesteckt ist.

12. Satz nach Anspruch 10 oder 11, wobei das optische Signal, das repräsentativ ist für eine Identifizierung, erhalten wird durch Modulieren des optischen Signals gemäß einer vorbestimmten Modulation.

13. Satz nach einem der Ansprüche 10 bis 12, wobei das optische Signal ein Infrarotsignal ist.

14. Teilnehmergerät (UE, 23), umfassend eine Kamera und einen Infrarotsensor, wobei besagtes Teilnehmergerät konfiguriert ist zum Senden eines Befehls an eine Zentralstation zum Auslösen einer Emission eines optischen Signals durch eine elektronische Bake zum Erkennen eines Infrarotsignals, das von einer elektronischen Bake (B) ausgesendet wird, die sich innerhalb des Kamerabereichs befindet, nach der Übertragung besagten Befehls, und zum Lokalisieren auf einem von der Kamera aufgenommenen Bild der Postition der elektronischen Bake (B), die das Infrarotsignal ausgesendet hat.

## Revendications

1. Procédé pour détecter, à partir d'un équipement utilisateur (UE, 23) comprenant des moyens de détection optiques, un dispositif interactif dans un environnement de champ proche d'une station centrale (CS, 9), ledit procédé comprenant les étapes suivantes :
- positionneur une balise électronique (B) sur le dispositif interactif, ladite balise électronique (B) comprenant des moyens optiques capables d'émettre un signal optique et des moyens de communication radiofréquence configurés pour communiquer avec la station centrale (CS, 9),
- configurer la station centrale (CS, 9) avec des fonctions du dispositif interactif associé à la balise électronique (B),
lorsque l'équipement utilisateur (UE, 23) entre dans un environnement de champ proche de la station centrale (CS, 9),
- établir une communication radiofréquence entre l'équipement utilisateur (UE, 23) et la station centrale (CS, 9),
- transmettre de la station centrale (CS, 9) à l'équipement utilisateur (UE, 23), les fonctions du dispositif interactif associé à la balise électronique (B) et une identification de la balise électronique (B),
- lors d'une demande de l'équipement utilisateur (UE, 23) à la station centrale (CS, 9) pour détecter le dispositif interactif, envoyer une commande de la station centrale (CS, 9) à la balise électronique (B) pour émettre un signal optique correspondant à l'identification du dispositif interactif,
- détecter, par les moyens de détection optiques de l'équipement utilisateur (UE, 23), un signal optique émis par la balise électronique (B) et correspondant à l'identification du dispositif interactif,
- attribuer les fonctions transmises par la station centrale et associées à la balise électronique identifiée (B) au dispositif interactif associé à la balise électronique détectée (B).

2. Procédé selon la revendication 1, dans lequel une pluralité de dispositifs interactifs est située dans l'environnement de champ proche de la station centrale (CS, 9), lesdits dispositifs interactifs étant associés respectivement à des balises électroniques (B) ayant des identifications différentes les unes des autres.

3. Procédé selon la revendication 1 ou 2, dans lequel les moyens de détection optiques se réfèrent à une caméra et dans lequel il comprend les étapes supplémentaires suivantes
- prendre une image ou une vidéo par la caméra de l'équipement utilisateur (UE, 23) de l'environnement de champ proche de la station centrale (CS, 9) et,
- afficher les fonctions du au moins un dispositif interactif associé à la balise électronique détectée (B) sur l'image ou la vidéo de l'environnement de champ proche de la station centrale (CS, 9).

4. Procédé selon l'une des revendications précédentes, dans lequel le signal optique est un signal émis dans le spectre visible.

5. Procédé selon l'une des revendications précédentes, dans lequel le signal optique est un signal émis dans le spectre infrarouge.

6. Procédé selon l'une des revendications précédentes, dans lequel la communication radiofréquence entre la station centrale (CS, 9) et les balises électroniques (B) est effectuée sur la base de l'un des protocoles suivants :
- un protocole Zigbee,
- un protocole Wireless fidelity (WIFI),
- un protocole Bluetooth.

7. Procédé selon l'une des revendications précédentes, dans lequel la communication radiofréquence entre la station centrale (CS, 9) et l'équipement utilisateur (UE, 23) est effectuée sur la base de l'un des protocoles suivants :
- un protocole Zigbee,
- un protocole Wireless fidelity (WIFI),
- un protocole Bluetooth,
- un protocole de troisième génération (3G).

8. Procédé selon l'une des revendications précédentes, dans lequel la demande de l'équipement utilisateur (UE, 23) à la station centrale (CS, 9) pour détecter le dispositif interactif comprend au moins une caractéristique technique associée aux moyens de détection optiques de l'équipement utilisateur (UE, 23) qui est utilisé pour configurer la balise électronique (B) pour émettre un signal optique.

9. Station centrale (CS, 9) comprenant :
- des moyens de communication en champ proche pour communiquer d'un côté avec un équipement utilisateur (UE, 23) et de l'autre côté avec au moins une balise électronique (B) associée à un dispositif interactif,
- un dépôt de données pour stocker les fonctions du au moins un dispositif interactif et une identification de la balise électronique associée (B),
la station centrale (CS, 9) étant configurée pour transmettre une liste des dispositifs interactifs, leurs fonctions et l'identification des balises électroniques associées (B) de l'environnement de champ proche de la station centrale (CS, 9) à un équipement utilisateur (UE, 23) lorsqu'une communication est établie avec un équipement utilisateur (UE, 23) et pour transmettre une demande pour émettre un signal optique vers une balise électronique (B) lors de la réception d'une demande en provenance d'un équipement utilisateur (UE, 23) pour détecter un dispositif interactif associé à la balise électronique (B).

10. Ensemble comprenant une station centrale selon la revendication 9 et au moins une balise électronique (B), dans lequel ladite balise électronique comprend des moyens optiques configurés pour émettre un signal optique représentatif d'une identification lors de la réception d'une demande en provenance de la station centrale (CS, 9).

11. Ensemble selon la revendication 10, dans lequel ladite balise électronique (B) est un dongle branché dans un dispositif interactif associé.

12. Ensemble selon la revendication 10 ou 11, dans lequel le signal optique représentatif d'une identification est obtenu en modulant le signal optique selon une modulation prédéterminée.

13. Ensemble selon l'une des revendications 10 à 12, dans lequel le signal optique est un signal infrarouge.

14. Équipement utilisateur (UE, 23) comprenant une caméra et un capteur de rayons infrarouges, ledit équipement utilisateur étant configuré pour envoyer une commande à une station centrale pour déclencheur une émission d'un signal optique par une balise électronique, pour détecter une signal infrarouge émis par une balise électronique (B) située dans la plage de la caméra suite à la transmission de ladite commande et pour localiser sur une image prise par la caméra la position de la balise électronique (B) ayant émis le signal infrarouge.
